Europäisches Patentamt

(19) European Patent Office

Office européen des brevets

(11) Numéro de publication: **0 146 890**

**B1**

(12) **FASCICULE DE BREVET EUROPÉEN**

(45) Date de publication du fascicule du brevet:
14.10.87

(21) Numéro de dépôt: **84115425.5**

(22) Date de dépôt: **14.12.84**

(51) Int. Cl.⁴: **B 60 L 3/00**, B 61 K 9/08

(54) Procédé et dispositif de franchissement automatique des lacunes d'appareils de voie de chemin de fer par un appareil en contact avec la surface de roulement des rails et relié à un véhicule ferroviaire en mouvement.

(30) Priorité: **16.12.83 FR 8320237**

(43) Date de publication de la demande:
**03.07.85 Bulletin 85/27**

(45) Mention de la délivrance du brevet:
**14.10.87 Bulletin 87/42**

(84) Etats contractants désignés:
**BE DE GB IT LU NL SE**

(56) Documents cité:
**DE-A-2 301 786**
**FR-A-1 283 704**
**FR-A-1 581 796**
**US-A-4 005 601**

(73) Titulaire: **SOCIETE NATIONALE DES CHEMINS DE FER FRANCAIS, 88, rue Saint- Lazare, F-75436 Paris Cedex 09 (FR)**
Titulaire: **Winkelmann, Christian, 8, rue de la Crèche, F-75017 Paris (FR)**

(72) Inventeur: **Winkelmann, Christian, 8, rue de la Crèche, F-75017 Paris (FR)**

(74) Mandataire: **Casalonga, Axel, BUREAU D.A. CASALONGA OFFICE JOSSE & PETIT Morassistrasse 8, D-8000 München 5 (DE)**

EP 0 146 890 B1

## Description

L'invention concerne essentiellement la maintenance des rails de chemin de fer.

Dans le cadre de la maintenance des rails de chemin de fer il est fréquent d'avoir à déplacer des appareils en contact avec la surface de roulement des rails et reliés à un véhicule ferroviaire en mouvement. C'est le cas par exemple des opérations de mesure de la géométrie de la table de roulement, de contrôle de la santé métallurgique des rails, ou de reprofilage de la table de roulement des falls.

Pour assurer la positionnement correct de ces appareils de contact lors de leur déplacement le long des rails il convient de leur adjoindre un dispositif de guidage vertical et tranaversal par rapport au champignon du rail qui, en voie courante, est la partie du profil du rail la plus apte à réaliser cette fonction.

Or les files de rails présentent des points singuliers, et en particulier dea lacunea, ou solutions de continuité, de longueur assez importante en regard de celles de ces appareils, par exemple dans les coeurs d'appareils de voie, et dont il convient de tenir compte dans la conception des dispsaitifs de guidage.

Le guidage transversal est assuré, dans les réalisations actuelles, par une pièce solidaire de ces appareils de contact prenant appui, en voie courante, sur la face latérale interne du champignon des rails, et au passage des lacunes d'appareils de voie aur le contre-rail de la file de rails opposée.

Le guidage vertical eat assuré, dans les réalisations actuelles, en voie courante par l'appui vertical même de ces appareils de contact sur la table de roulement des rails, et, au passage des lacunes d'appareils de voie, par l'appui d'une pièce solidaire de ces appareils de contact et dont, dans certaines réalisations la longueur, et dans d'autres la largeur, est étudiée pour que cette pièce puisse prendre appui, soit sur la pointe de coeur, soit sur la patte de lièvre adjacente à la lacune de l'appareil de voie.

Ces dispositifs de guidage vertical présentent l'inconvénient d'entraîner des chocs néfastes au passage des lacunes, chocs qui deviennent inadmissibles avec l'augmentation des vitesses des véhicules.

On trouve également quelques réalisations dans lesquelles un observateur, placé à l'avant du véhicule, commande manuellement une montée puis une descente de ces appareils de contact au franchissement des lacunes d'appareils de voie. Ce dernier procédé est évidemment contraignant, faillible et imprécis.

Le but de l'invention est d'éliminer les inconvénients qui précèdent et d'assurer l'exécution automatique de toutes les manoeuvres nécessaires par des moyens supportant sans dommage les grandes vitesses.

Le procédé de franchissement automatique des lacunes d'appareils de voie de chemin de fer par un appareil en contact avec la surface de roulement des rails et porté par un véhicule ferroviaire en mouvement est caractérisé par le fait:

a) que l'on détecte la présence des lacunes par au moins un capteur de proximité sans contact porté également par le véhicule juste au-dessus de la table de roulement des rails et à une certaine distance en avant de l'appareil de contact en fonction d'un sens d'avancement déterminé;

b) que l'on engendre un signal représentatif de la distance parcourue par le véhicule par un moyen approprié;

c) que l'on décale l'information de détection de lacunes provenant du ou des capteurs d'une quantité correspondant à l'information de distance parcourue, en fonction de ladite certaine distance entre les capteurs et l'appareil de contact, respectivement minorée et majorée d'une certaine quantité pour la montée et la descente de l'appareil de contact et

d) que l'on commande des effecteurs d'élévation et d'abaissement de l'appareil de contact en fonction de l'information ainsi décalée.

Le dispositif pour la mise en oeuvre du procédé selon l'invention utilise de préférence pour l'opération (b) une roue codeuse entraînée en rotation à une vitesse égale ou proportionnelle à celle des roues du véhicule, et pour l'opération (c) un registre à décalage de type numérique, avec les transformations analogique/numérique et numérique/analogique nécessaires en amont et en aval.

Le dispositif utilise de préférence deux capteurs de proximité situes l'un derrière l'autre, à une distance suffisante et actionnant le dispositif par l'intermédiaire d'une porte logique, pour ne pas être influencé par des lacunes de faible dimension longitudinale telles que des joints de rails.

D'autres particularités de l'invention apparaîtront dans la description qui va suivre d'un mode de réalisation pris comme exemple et représenté sur le dessin annexé sur lequel:

la figure 1 est une vue de dessus d'une file de rails au voisinage d'une lacune d'appareils de voie;

la figure 2 est une vue en élévation d'un exemple de véhicule ferroviaire équipé du dispositif selon l'invention;

la figure 3 représente un détail à plus grande échelle de la partie inférieure droite de la figure 2;

la figure 4 est une vue en bout de la figure 3; et

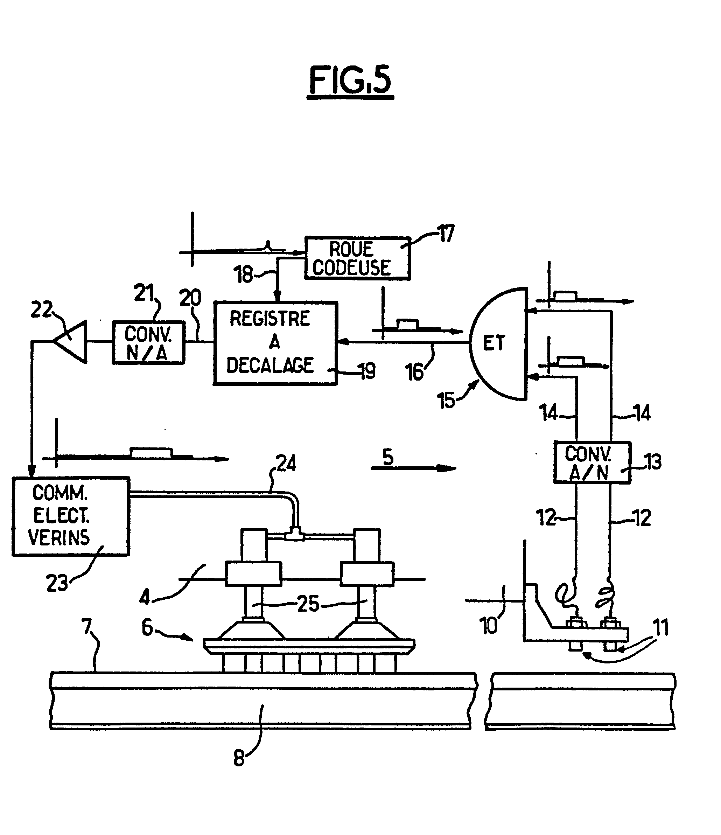

la figure 5 est le schéma d'ensemble du dispositif.

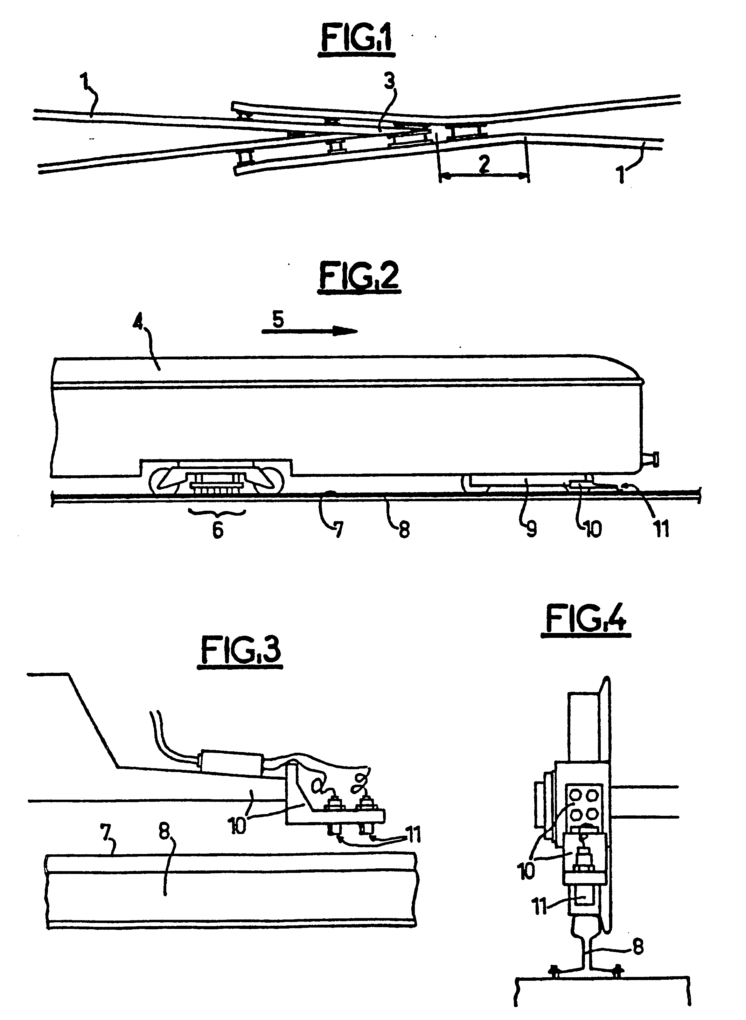

Sur la figure 1 on voit les deux files de rails de voie courante 1 séparées par une lacune 2 et une pointe de coeur 3.

Le véhicule ferroviaire 4 représenté sur la figure 2, est destiné à se déplacer dans le sens représenté par la flèche 5 et comporte d'une manière classique un appareil de contact 6 destiné à se déplacer en restant en contact avec la surface de roulement 7 des rails 8, et qui doit par conséquent être soulevé pour franchir des lacunes d'appareils de voie telles que 2 sur la figure 1.

Conformément à l'invention, le véhicule 4, et plus précisément son bogie avant 9, comporte un support 10 se prolongeant vers l'avant dans le sens 5 et portant des capteurs de proximité 11. Comme on le voit sur les détails des figures 3 et 4, ces capteurs de proximité 11 ne sont pas en contact avec le rail 8 et se déplacent au-dessus et à faible distance de la table de roulement 7.

Ces capteurs de proximité 11 sans contact peuvent être de n'importe quel type, selfique, capacitif ou à barrière de réflexion, pourvu que les signaux analogiques qu'ils délivrent à leur sortie 12 en présence de rails de voie courante 1 ou de coeurs 3 d'appareils de voie soient nettement différents de ceux qu'ils fournissent en présence d'une lacune 2. En outre ils sont de préférence au nombre de deux, situés l'un derrière l'autre, pour permettre la différenciation entre les véritables lacunes et les joints de rails à grande ouverture, comme on va le voir dans ce qui suit.

Les signaux analogues fournis en 12 par les capteurs 11 sont traités par un dispositif détecteur ou convertisseur analogique/numérique 13 double de manière à fournir des signaux numériques à l'état haut ou à l'état bas sur les deux sorties 14 correspondant aux deux entrées 12, les signaux hauts correspondant à la détection d'une lacune, c'est-à-dire à l'absence de détection de métal par le capteur 11 correspondant.

Les deux lignes 14 sont réunies aux deux entrées d'une porte ET 15 dont la sortie 16 fournit un signal numérique à l'état haut lors de la détection d'une véritable lacune. En effet, les deux signaux analogiques 12, et par conséquent les signaux numériques 14 correspondants, se trouvent décalés dans le temps d'une valeur correspondant à la distance entre les deux capteurs 11, et ils ont eux-même une durée correspondant à la dimension de la lacune 2. Si donc une véritable lacune se présente, avec une dimension nettement plus importante que la distance entre les capteurs 11, le premier signal établi ne cesse que bien après l'établissement du second, de sorte que la fonction ET produit une impulsion d'une durée déterminée. Au contraire au passage des joints de rails à grande ouverture, celle-ci étant inférieure à la distance entre les capteurs 11, le premier signal établi se trouve interrompu avant que commence le second, de sorte que la fonction ET ne produit aucune impulsion.

Le dispositif se complète par une roue codeuse 17 solidaire en rotation d'une roue de référence du véhicule 4, ou tout dispositif équivalent qui matérialise la vitesse de ce véhicule par une série d'impulsions représentant chacune une certaine distance parcourue. Ces impulsions commandent par 18 la séquence d'isolement et de décalage d'un registre à décalage 19 recevant le signal numérique 16. Ainsi, au rythme de ces impulsions, le registre à décalage 19 découpe le signal 16 en signaux binaires successifs qui cheminent sur un certain nombre de pas, et finissent par aboutir à la sortie 20 du registre à décalage, toujours sous forme numérique mais décalés dans le temps d'une quantité correspondant au nombre déterminé de pas de décalage, cc'est-à-dire par conséquent à une distance déterminée parcourue par le véhicule 4. Naturellement ce nombre est déterminé de manière à correspondre à la distance mesurée sur le véhicule entre les capteurs 11 et l'appareil de contact 6. En réalité le registre à décalage comporte deux sorties 20 correspondant à deux nombres de pas différents définis par le nombre précédent, respectivement majoré et minoré d'une certaine quantité tenant compte d'une part de l'encombrement en longueur de l'appareil de contact 6 et d'autre part des temps nécessaires à la montée et à la descente de cet appareil. La première sortie est prise en compte lors de la montée et la seconde lors de la descente pour assurer la sécurité nécessaire.

Ces signaux de sortie 20 sont transformés à leur tour par un convertisseur numérique/analogique 21 en un signal analogique, amplifié par un amplificateur 22, et qui alimente un dispositif 23 de commande électrique de montée et de descente de l'appareil 6. Le dispositif 23 peut par exemple être une électrovanne qui alimente par 24 des vérins à air comprimé 25 dans le sens de la montée ou dans celui de la descente. On pourrait naturellement utiliser n'importe quel autre type d'effecteurs, par exemple électriques ou hydrauliques en adaptant le dispositif de commande 23 en conséquence.

L'installation selon l'invention est ainsi relativement simple et permet, grâce à sa commande intermédiaire numérique et au registre à décalage, d'assurer un fonctionnement précis, indéréglable et indépendant de la vitesse de circulation du véhicule, puisque le décalage est opéré en fonction directe de la distance parcourue.

## Revendications

1. Procédé de franchissement automatique des lacunes (2) d'appareils de voie de chemin de fer par un appareil (6) en contact avec la surface de roulement des rails (8) et porté par un véhicule ferroviaire (4) en mouvement, caractérisé par le fait:

a) que l'on détecte la présence des lacunes par au moins un capteur de proximité (11) sans contact porté également par le véhicule (4) juste au-dessus de la table de roulement (7) des rails (8) et à une certaine distance en avant de l'appareil de contact (6) en fonction d'un sens d'avancement (5) déterminé;

b) que l'on engendre un signal représentatif de la distance parcourue par le véhicule par un moyen (17) approprié;

c) que l'on décale l'information de détection de lacunes provenant du ou des capteurs (11) d'une quantité correspondant à l'information de distance parcourue, en fonction de ladite certaine distance entre les capteurs (11) et l'appareil de contact (6), respectivement minorée et majorée d'une certaine quantité pour la montée et la descente de l'appareil de contact (6); et

d) que l'on commande des effecteurs (25) d'élévation et d'abaissement de l'appareil de contact (6) en fonction de l'information ainsi décalée.

2. Dispositif pour la mise en oeuvre du procédé selon la revendication 1, caractérisé par le fait qu'il comporte un convertisseur (13) pour transformer l'information provenant du ou des capteurs (11) en signal numérique (14), un dispositif approprié (17) fournissant l'information de distance parcourue sous la forme d'une série d'impulsions représentatives de la distance parcourue, un registre à décalage (19) opérant le décalage des informations en découpant et décalant du nombre voulu de pas l'information numérique (14) du ou des capteurs (11) au rythme desdites impulsions (18) représentatives de la distance parcourue, et un autre convertisseur (21) retransformant l'information numérique finale en informarion analogique pour actionner les effecteurs (25).

3. Dispositif selon la revendication 2, caractérisé par le fait qu'il comporte deux capteurs (11) situés l'un derrière l'autre à une distance déterminée, et que les signaux numériques (14) correspondant à ces deux capteurs (11) sont connectés aux entrées d'une porte logique ET (15) dont la sortie (16) fournit le signal de présence de lacune au registre de décalage (19), ladite distance étant déterminée pour que l'ensemble du dispositif ne détecte pas les joints de rails à grande ouverture, mais seulement les lacunes d'une importance suffisante pour nécessiter la levée de l'appareil de contact (6).

4. Dispositif selon la revendication 3, caractérisé par le fait que le dispositif engendrant les impulsions (18) représentatives de la distance parcourue est constitué par une roue codeuse (17) dont la vitesse est directement égale ou proportionnelle à la vitesse des roues du véhicule et qui coopère avec un capteur approprié.

5. Dispositif selon une des revendictions 2 à 4, caractérisé par le fait que les effecteurs (25) commandant le soulèvement et l'abaissement de l'appareil de contact (6) sont constitués par des vérins à air comprimé.

**Patentansprüche**

1. Verfahren zum automatischen Überfahren von Lücken (2) in Eisenbahnweichen oder -kreuzungen durch ein Kontaktgerät (6), das in Berührung mit der Schienenbahn (8) steht und von einem in Bewegung befindlichen Eisenbahnfahrzeug (4) getragen wird, dadurch gekennzeichnet,

a) daß man das Vorkommen der Lücke mittels eines kontaktlosen Fühlers (11) erfaßt, der ebenfalls von dem Fahrzeug (4) getragen unmittelbar über der Oberkante (7) der Schiene (8) geführt wird und einen bestimmten Abstand vom Kontaktgerät (6) in Abhängigkeit von der Vorwärtsrichtung (5) hat;

b) daß man ein für die vom Fahrzeug zurückgelegte Strecke repräsentatives Signal durch ein geeignetes Mittel (17) erzeugt;

c) daß man die von dem Fühler bzw. den Fühlern (11) stammende Information über die Erfassung der Lücken um eine der Information über die zurückgelegte Strecke entsprechende Größe verzögert in Abhängigkeit von dem genannten bestimmten Abstand zwischen dem Fühler (11) und dem Kontaktgerät (6), vermindert bzw. vergrößert um eine bestimmte Größe zum Hochfahren bzw. Absenken des Kontaktgeräts (6);

und

d) daß man die Betätiger (25) zum Hochfahren bzw. Absenken des Kontaktgeräts (6) in Abhänkigkeit von der so verzögerten Information steuert.

2. Vorrichtung zur Durchführung des Verfahrens gemäß Anspruch 1, dadurch gekennzeichnet, daß sie umfaßt: Einen Wandler (13) zur Umwandlung der von dem Fühler bzw. den Fülern (11) gelieferten Information in ein digitales Signal (14), ein geeignetes Gerät (17), das die Information über die zurückgelegte Strecke in Form einer für die zurückgelegte Strecke repräsentativen Impulsfolge liefert, ein Schieberegister (19), das die Verzögerung der Informationen durch Abschneiden und Verschieben der digitalen Information des Fühlers bzw. der Fühler (11) von der erforderlichen Schrittzahl im Takt der genammten für die zurückgelegte Strecke repräsentativen Impulse bewirkt, sowie einen weiteren Wandler (21), der die letztendliche digitale Information in eine analoge Information um Ingangsetzen der Betätiger (25) rückverwandel.

3. Vorrichtung gemäß Anspruch 2, dadurch gekennzeichnet, daß sie zwei Fühler (11) enthält, die im vorbestimmten Abstand hintereinander angeordnet sind, und daß die digitalen Signale (14), die diesen beiden Fühlern (11) entsprechen, an den Eingängen eines logischen UND Schaltelements (15) liegen, dessen Ausgang (16) das Signal für das Vorkommen einer Lucke an das Schieberegister (19) liefert, wobei dieser Abstand so ausgelegt wird, daß die ganze Vorrichtung größere Schienenstöße nicht erfaßt, sondern nur solche Lücken, die so groß sind, daß das Kontaktgerät hochgefahren werden muß.

4. Vorrichtung gemäß Anspruch 3, dadurch gekennzeichnet, daß die Vorrichtung, die die für die zurückgelegte Strecke repräsentativen Impulse (18) erzeugt, aus einem Impulsgeberrad (17) besteht, dessen Drehzahl gleich oder proportional der Drehzahl der Fahrzeugräder ist und das mit einem geeigneten Füler zusammenwirkt.

5. Vorrichtung gemäß einem beliebigen der Ansprüche 2 bis 4, dadurch gekennzeichnet, daß die Betätiger (25), die das Hochfahren bzw. Absenken des Kontaktgeräts (6) bewirken, aus druckluftbetätigten Druckzylindern bestehen.


**Claims**

1. Method for automatically traversing the gaps (2) in railroad points and crossings by an apparatus (6) contacting the running surface of the rails (8) and carried by a moving railway vehicle (4), characterised by the fact:

a) that the presence of the gaps is detected by at least one contactless proximity sensor (11) carried likewise by the vehicle (4) just above the upper face (7) of the rails (8) and at a certain distance in front of the contact apparatus (6) according to a fixed direction of progression (5);

b) that a signal which is representative of the distance covered by the vehicle is generated by an appropriate means (17);

c) that the gap detection information coming from the sensor or sensors (11) is offset by a quantity corresponding to the distance-covered information, according to the said certain distance between the sensors (11) and the contact apparatus (6), reduced and increased respectively by a certain quantity for the rise and descent of the contact apparatus (6); and

d) that actuators (25) for elevating and lowering the contact apparatus (6) are controlled according to the information thus offset.

2. Device for implementing the method in accordance with claim 1, characterised by the fact that it comprises a converter (13) for converting the information coming from the sensor or sensors (11) into a digital signal (14), an appropriate device (17) supplying the distance-covered information in the form of a series of impulses which are representative of the distance covered, a shift register (19) operating the shift of the information by cutting up and offsetting by the desired number of steps the digital information (14) of the sensor or sensors (11) to the rhythm of the said impulses (18) which are representative of the distance covered, and another converter (21) reconverting the final digital information into analog information to activate the actuators (25).

3. Device in accordance with claim 2, characterised by the fact that it comprises two sensors (11) situated one behind the other at a fixed distance, and that the digital signals (14) corresponding to these two sensors (11) are connected to the inputs of a logic AND gate (15), the output (16) of which supplies the signal for the presence of a gap to the shift register (19), the said distance being fixed so that the whole device does not detect the rail joints with a large span, but only the gaps large enough to necessitate the lifting of the contact apparatus (6).

4. Device in accordance with claim 3, characterised by the fact that the device generating the impulses (18) which are representative of the distance covered is constituted by a coder wheel (17), the speed of which is directly equal or proportionate to the speed of the vehicle wheels and which cooperates with an appropriate sensor.

5. Device in accordance with one of claims 2 to 4, characterised by the fact that the actuators (25) controlling the lifting up and lowering of the contact apparatus (6) are constituted by compressed air jacks.

0 146 890

# FIG.1

# FIG.2

# FIG.3

# FIG.4

# FIG.5